# EUROPEAN PATENT APPLICATION

(11) **EP 2 925 093 A1**
(43) Date of publication of application: **30.09.2015**
(21) Application number: 14162390.0
(22) Date of filing: 28.03.2014
(51) Int. Cl.: H05B 33/08

(54) **An actively switchable bleeder for a phase-cut dimmer**

(71) Applicant: Helvar Oy Ab, 03600 Karkkila (FI)
(72) Inventor: Dominey, John, Dartford, Kent DA2 7SY (GB)
(74) Representative: Berggren Oy Ab

(57) **Abstract**

According to an example embodiment, a circuit for use as a bottom load in an output of a dimmer device arranged to provide trailing-edge type phase-cut alternating current for a dimmable light source is provided. The circuit comprises a bottom load circuit comprising a controllable current path that couples poles of said output to each other and a bottom load resistor arranged in said controllable current path, and a control circuit comprising a command input for receiving an activation command, the control circuit arranged to selectively enable or disable the flow of electric current through said bottom load in accordance with the activation command.

## Description

### FIELD OF THE INVENTION

The example embodiments of the present invention relate to using a bottom load, for example, in context of controlling light intensity level of a dimmable light source.

### BACKGROUND OF THE INVENTION

The AC electrical power supplied to a load can be reduced by cutting off a part of each half cycle of alternating current. This approach provides a convenient way to adjust the light intensity level of an incandescent lamp. Such cutting of portions of half cycles is called phase-cutting and it can be done in the so-called "leading edge" or "trailing edge" mode. Phase-cutting in the leading edge mode means that the current is turned on somewhere in the middle of an alternating current (AC) half-wave, and it is allowed to flow until the end of the AC half-wave, i.e. until the current reaches a zero value between the half-waves. In a corresponding way, phase-cutting in the trailing edge mode means that the current is allowed to flow from the very beginning of a AC half-wave, but it is cut off before the AC half-wave has come to an end.

Applying a phase-cut AC current to provide dimming of light can be referred to as phase-cut dimming. The phase-cut dimming is typically implemented in a dimmer device that controls provision of the operating power (typically from the mains electricity) to the load, e.g. a luminaire hosting one or more dimmable light sources. Phase-cut dimming is the *de facto* standard technique of dimming AC-driven incandescent lamps all over the world, because it is simple to implement and works well to create the desired dimming effect. However, there is evidence that it may cause problems if attempted with other light sources, such as light-emitting diode (LED) light sources. In particular it has been found that phase-cut dimming does not easily create the desired dimming effect with retrofit LED bulbs. A retrofit LED bulb has the same mechanical interface as a traditional incandescent light bulb and is designed to be driven with AC power of same voltage rating to ensure that it can be used as a replacement for traditional incandescent bulbs.

### SUMMARY OF THE INVENTION

It is an object of the present invention to provide a technique that enables accurate and energy-efficient dimming of a dimmable light source by using the phase-cut dimming.

The object(s) of the invention are reached by a circuit as defined by the respective independent claims.

According to an example embodiment, a circuit for use as a bottom load in an output of a dimmer device arranged to provide trailing-edge type phase-cut alternating current for a dimmable light source is provided. The circuit comprises a bottom load circuit comprising a controllable current path that couples poles of said output to each other and a bottom load resistor arranged in said con-trollable current path, and a control circuit comprising a command input for receiving an activation command, the control circuit arranged to selectively enable or disable the flow of electric current through said bottom load in accordance with the activation command.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 illustrates the concept of phase-cutting.
Figure 2 schematically illustrates an arrangement for providing dimmable lighting on basis of phase-cut AC according to an example embodiment.
Figure 3 schematically illustrates an arrangement for providing dimmable lighting on basis of phase-cut AC according to an example embodiment.
Figure 4 illustrates an unwanted extension of the phase-cut half-wave that may occur due to the discharge of unwanted capacitively stored energy.
Figure 5 schematically illustrates some components of a discharging circuit according to an example embodiment.
Figure 6 schematically illustrates a bottom load circuit according to an example embodiment.
Figure 7 schematically illustrates a bottom load circuit according to an example embodiment.
Figure 8 schematically illustrates a control circuit according to an example embodiment.
Figure 9 schematically illustrates a control circuit according to an example embodiment.
Figure 10 schematically illustrates the discharging circuit according to an example embodiment.

### DETAILED DESCRIPTION

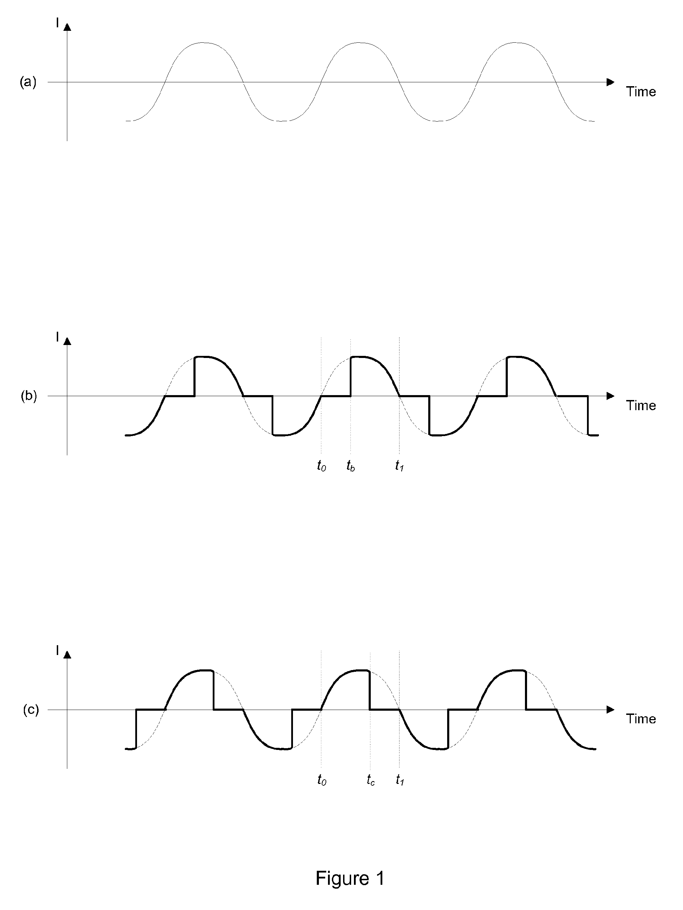

Figure 1 illustrates the concept of phase-cutting and phase-cut dimming introduced in the foregoing. Diagram (a) depicts a segment of alternating current (AC) exhibiting (or approximating) a sinusoidal periodical variation of the current level as a function of time.

A bold solid curve in diagram (b) depicts the corresponding segment of AC with "leading edge" phase-cutting, whereas a thin dashed curve in diagram (b) depicts the corresponding "uncut" AC approximating the sinusoidal waveform. As illustrated in the example of diagram (b), in the "leading edge" phase-cutting the leading part of each half-wave from time *t*₀ to time *t_{b}* is cut off whereas the remaining part of each half-wave from time *t_{b}* to time *t₁* follows the waveform of the respective "uncut" half-wave of the AC. In this example, the cut-off part in the beginning of each half-wave from time *t*₀ to time *t_{b}* has duration *T_{off_le}*, whereas the duration of the "uncut" half-wave time to to time *t₁* is *T*_{hf}, thereby leaving the active part in the end of each half-wave time *t_{b}* to time *t₁* with duration *T_{on_le} = T_{hf}* - *T_{off_le}.*

A bold solid curve in diagram (c) depicts the corresponding segment of AC with "trailing edge" phase-cutting, whereas a thin dashed curve in diagram (c) depicts the corresponding "uncut" AC approximating the sinusoidal waveform. As illustrated inn the example of diagram (c), in the "trailing edge" phase-cutting the leading part of each half-wave from time *t*₀ to time *t_{c}* follows the form of the respective "uncut" half-wave of the AC, whereas the trailing part of each half-wave from time *t_{c}* to time *t₁* is cut off. In this example, the cut-off part in the end of each half-wave from time *t*₀ to time *t_{c}* has duration *T_{off_te},* whereas the duration of the "uncut" half-wave from time *t*₀ to time *t₁* is *T*_{hf}, thereby leaving the active part in the beginning of each half-wave from time *t₀* to time *t_{c}* with duration *T_{on_te} = T_{hf} - T_{off_te}.*

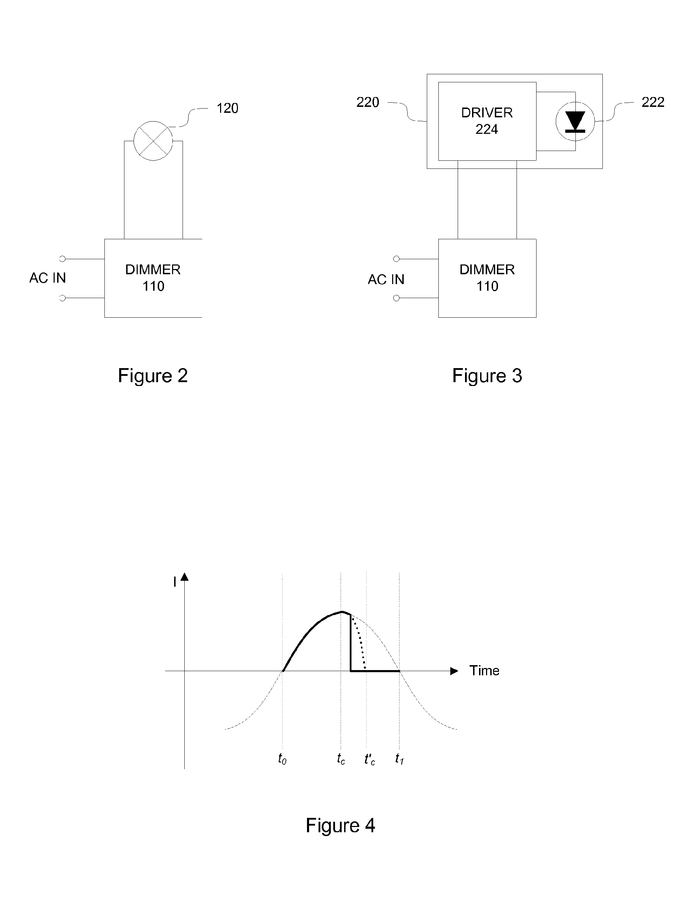

Typically, the duration of the time period *T_{on_le}* or *T_{on_te}* has been selected such that each half-wave carries a desired fraction of the energy in comparison to the energy carried by an "uncut" half-wave in order to operate an incandescent lamp with the corresponding fraction of the nominal (or maximum) light intensity. Figure 2 schematically illustrates an exemplifying arrangement for providing dimmable lighting on basis of phase-cut AC. In Figure 2, the operating energy is provided to a dimmer device 110 via an operating power input "AC IN". The operating power may be obtained e.g. from the mains electricity and e.g. 230 V AC at 50 Hz may be used. The dimmer device 110 may be arranged to apply phase-cut dimming based on e.g. the "leading edge" or the "trailing edge" phase-cutting and to supply the phase-cut AC as the operating power to an incandescent lamp 120. The extent of phase-cutting (e.g. the duration of the time period *T_{off_le}* or *T_{off_te}*) is (indirectly) selectable by a user via a user interface of the dimming device 120, e.g. by operating a rotatable knob, a sliding knob or push-buttons arranged in a housing of the dimmer device 110. Consequently, the extent of phase cutting may be varied over time and hence from one half-wave to another.

Figure 3 schematically depicts an alternative arrangement for providing dimmable lighting using the dimmer device 110. In Figure 3, the dimmer device 110 is arranged to supply a lighting device 220 that makes use of one or more light emitting diodes (LEDs) 222 as the light source. In addition to the LEDs 222, the lighting device 220 further comprises a LED driver 224 arranged to convert the operating power suitable for driving the LEDs 222 in a desired manner. The lighting device 220 may be provided e.g. as a retrofit LED bulb that provides the same mechanical interface as a traditional incandescent light bulb while providing a similar light output at a significantly reduced energy consumption. Alternatively the lighting device 220 may be provided e.g. as a luminaire that comprises a driver portion that acts as an interface between control units (such as the dimmer 110) and the LED light sources.

The efficiency of LEDs is much higher than that of the incandescent lamp 120, and hence in comparison to the incandescent lamp 120 the LEDs 222 require only a fraction of the energy - which can be derived on basis of a fraction of the active part of the phase-cut half-wave provided in the phase-cut AC supplied from the dimmer device 110. Consequently, the lighting device 220 may employ only a fraction from each (possibly phase-cut) half-wave in generation the light output from the LEDs 222. However, the LED driver 224 is typically arranged to apply the duration of the remaining active period *T*_{*on*_*le*} or *T_{on_te}* in a phase-cut half-wave in relation to the overall duration of an "uncut" half-wave *T_{hf},* i.e. *T_{on_le}* / *T_{hf}* or *T*_{*on*_*te*} / *T*_{hf}, as an indicator of the desired light output level.

In trailing edge type phase-cut dimming one must take into account that if there is significant capacitance at the output of the dimmer device and/or at the input of the load, the capacitively stored electrical energy may remain, maintaining a current through the load for a short period of time also after the trailing edge cutting moment, when no more current should flow during the remaining part of the half-wave. In a way the output capacitance of the dimmer device and/or the input capacitance of the load are likely to extend the half-wave to be longer than what the dimmer devices intends it to be. For example in AC of 50 Hz frequency, one half-wave only lasts for 10 milliseconds (ms), so already a "tail" of a few milliseconds may result in a light intensity level that is significantly different from the desired one, thereby ruining the desired dimming effect to a significant extent. This problem becomes even more prominent in dimming of LED light sources, because - contrary to traditional incandescent light bulbs-LED light sources produce light output even at a very small current, which is easily created by the unintentional "tail" that remains after the half-wave should have been cut off already.

A retrofit LED bulb may use the length (duration) of the half-wave only as an information of the lighting level it should produce; the amount of energy it actually needs for production of the light output is so small that it can be derived even from a relatively short portion of each half-wave. Hence, a retrofit LED bulb regards the length (duration) of the phase-cut half-wave coming from the dimmer device only as a command that indicates a desired light intensity level (dimming level). In this kind of applications a "tail" of even a few microseconds may already result a significant deviation from the desired light intensity level. This phenomenon is analyzed in more detail in the following.

While applying the phase-cut dimming in context of any practical lighting arrangement, e.g. one according to the example of Figure 2 or Figure 3, any unintentionally appearing capacitance (e.g. parasitic capacitance) in the output of the dimmer device 110 and/or in the input of the load (e.g. the incandescent lamp 120 or the lighting device 120) is likely to result in capacitively storing electrical energy. At the end of each half-wave, this capacitively stored energy is discharged, causing the electric current to continue to flow for a period of time after the end of the active portion of a phase-cut half-wave. If applying phase-cut dimming, this phenomenon results in extending the temporal duration of the half-wave, thereby leading in increased energy supply to the load.

Especially in the "trailing edge" phase-cut dimming where the half-wave may be interrupted at or close to the peak value of the AC, the current resulting from the discharge of unwanted capacitively stored energy may have a significant contribution to the resulting light intensity level. While for an incandescent lamp 120 this may result in a light intensity level that is only slightly higher than the intended one, for the LEDs 222 the deviation from the desired light intensity level may be significant. One reason for this is that the LEDs 222 do not gradually decrease their light intensity with decreasing driving current but continue to provide the light output at (essentially) full light intensity until the driving current drops below a certain threshold. Moreover, as described in the foregoing, the LED driver 224 is typically arranged to use the ratio *T_{on_te}* / *T_{hf}* (or the ratio *T_{on_le}* / *T_{hf}*) in the phase-cut AC received from the dimmer device 110 as an indication of the desired light intensity level. If the duration of the active period *T_{on_le}* in the beginning of a phase-cut half-wave is extended due to the discharge of unwanted capacitively stored energy, the LED driver 224 is likely to adjust the light intensity level of the LEDs 222 to be higher than the desired light intensity level.

Figure 4 depicts this phenomenon for a single half-wave by showing the "uncut" half-wave as a dashed curve, the desired phase-cut half-wave as a solid bold curve and the unwanted extension of the phase-cut half-wave as a dotted curve. As the example of Figure 4 illustrates, due to the discharge of unwanted capacitively stored energy the phase-cut half-wave extends until time *t*'*_{c}*, although the desired behavior is to terminate the phase-cut half-wave at time *t_{c}.*

One solution for mitigating the above-described effect of the phase-cut dimming could be the use a so-called "bottom load", provided e.g. as a shunt resistor at the output of the dimmer device and/or at the input of the load. The shunt resistor would offer a discharge route for any capacitively stored unwanted energy. It is, however, not a very energy efficient solution, because during the active period of each half-wave a part of the current flows all the time through the shunt resistor, and is thus wasted.

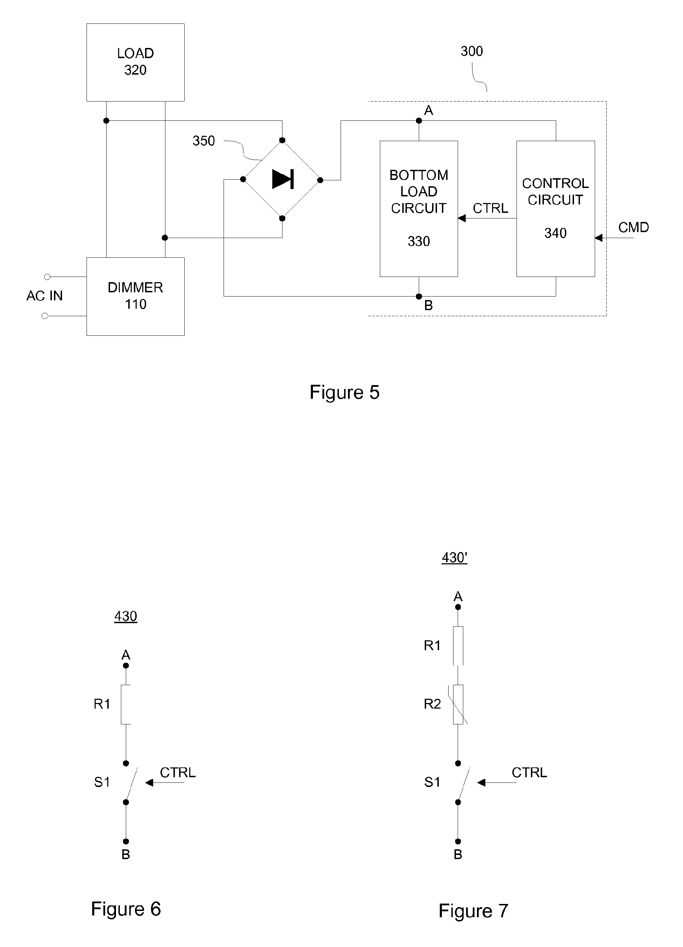

Figure 5 schematically illustrates some components of a discharging circuit 300 for use as an active bottom load in the output of the dimmer device 110 that is arranged to employ the "trailing edge" phase-cut dimming and to supply the phase-cut AC as the operating power to a load 320. The load 320 may comprise e.g. the incandescent lamp 220, the lighting device 220 or a dimmable light source of other type. More generally, the discharging circuit 300 may be said to appear at the interface between the dimmer device 110 and the load 320.

The discharging circuit 300 comprises a bottom load circuit 330 and a control circuit 340. The discharging circuit 300 is coupled to the AC output from the dimmer device 110 via a bridge rectifier 350. The bridge rectifier 350 provides full-wave rectified direct current (DC) output that is supplied to the bottom load circuit 330 and to the control circuit 340. A rectifier as a part of the coupling from the output of the dimmer device 110 to the discharging circuit 300 is optional, and the principle of active bottom load could be realized without one. Using a rectifier such as the bridge rectifier 350 simplifies the design of the bottom load circuit 330 and the control circuit 340, because they only need to be designed for one voltage polarity.

The bottom load circuit 330 comprises a controllable current path from a node A to a node B in the discharging circuit 300, in other words the controllable current path couples poles of the dimmer device 110 output to each other (via the bridge rectifier 350, if one is used). The bottom load circuit 330 further comprises a bottom load resistor arranged in the controllable current path between the nodes A and B.

The control circuit 340 comprises a command input for receiving an activation command CMD, and the control circuit 340 is arranged to issue a control signal CTRL to selectively enable or disable the flow of electric current through said bottom load in accordance with the activation command CMD. The control circuit 340 is arranged to issue the control signal CTRL in one of an enabling state and a non-enabling state such that the enabling state of the control signal causes enabling the flow of electric current through the bottom load while the non-enabling state disabled the flow of electric current through the bottom load.

The discharging circuit 300 may be operated by issuing the activation command CMD in accordance with the timing of the phase-cut half-waves of the phase-cut AC output from the dimmer device 110. In particular, the activation commands CMD may be issued synchronously with the cut-off moments at the trailing edges of the phase-cut half-waves of the phase-cut AC. The activation commands CMD may originate from a control portion provided e.g. as a part of the discharging circuit or as an external control entity. The control portion/entity may be provided by hardware means, by software means or by a combination of hardware and software means. As an example, the control portion/entity may be provided as a processor (as a microprocessor, as a microcontroller, etc.) that is arranged to issue the activation commands CMD according to the timing information provided by the dimmer device 110. Alternatively, the flow of information may be the other way around, i.e. the control portion/entity may be configured to control the timing for operating the dimmer device 110 and/or the discharging circuit 300. As an example in this regard, the dimmer device 110 may be part of a processor-controlled lighting controller, the main processor of which is equipped with zero-voltage detection (ZVD) means and configured to deliver timing information to dimmer units that constitute outputs of the lighting controller, the main processor hence serving as the control portion. For the purposes of the present invention, however, it is not important where the activation commands CMD originate; it is sufficient to assume that some controlling entity is well enough aware of the relevant timing of the AC half-waves to issue the activation commands CMD. The timing information comprises indications of the cut-off moments at the trailing edges of the phase-cut half-waves of the phase-cut AC output from the dimmer device 110.

Consequently, the control circuit 340 may be arranged to issue the control signal CTRL in the enabling state in response to receiving the activation command CMD to enable the flow of electric current through the bottom load resistor and to issue the control signal CTRL in the non-enabling state in response to not receiving the activation command CMD to disable the flow of electric current through the bottom load resistor. Note receiving the activation command CMD may comprise not receiving any command or receiving a command different from the activation command CMD.

Figure 6 schematically illustrates a bottom load circuit 430 according to an embodiment. The bottom load circuit 430 comprises a resistor R1 serving as the bottom load resistor and a switch S1, both arranged in the current path connecting the node A to the node B. The resistor R1 may be provided e.g. as a shunt resistor of suitable characteristics.

The switch S1 may be provided as a transistor, e.g. as a metal-oxide-semiconductor field-effect-transistor (MOSFET) with its drain coupled to the node A (e.g. through resistor R1, as in Figure 6), its source coupled to the node B and its gate coupled to a conductor employed to carry the control signal CTRL. As another example, the switch S1 may be provided as a transistor of other type, e.g. as a bipolar junction transistor (BJT)..

Figure 7 schematically illustrates a bottom load circuit 430' according to another embodiment. The bottom load circuit 430' differs from the bottom load circuit 430 in that there is further a positive temperature coefficient (PTC) thermistor R2 arranged in the current path connecting the node A to the node B. The PTC thermistor R2 serves as an automatic current limiter for the current that flows from the node A to the node B and hence through the bottom load resistor R1: a malfunction of the discharging circuit 300 may cause a condition in which the current constantly flows between the nodes A and B, thereby heating up the components in the current path therebetween. The resistance of the PTC thermistor R2 increases with increasing temperature and hence automatically limits the current via the bottom load resistor R1 and the switch S1 in case such a condition arises.

The mutual order of resistive component(s) and switching component(s) on the current path between the node A and the node B can be different than the one example embodiments of Figure 6 and Figure 7.

The control signal CTRL in the enabling state is arranged to close the switch S1 and/or to keep the switch S1 in the closed state to enable the flow of electric current through the bottom load resistor R1, whereas the control signal CTRL in the non-enabling state is arranged to open the switch S1 and/or keep the switch S1 in the open state to disable the flow of electric current through the bottom load resistor R1.

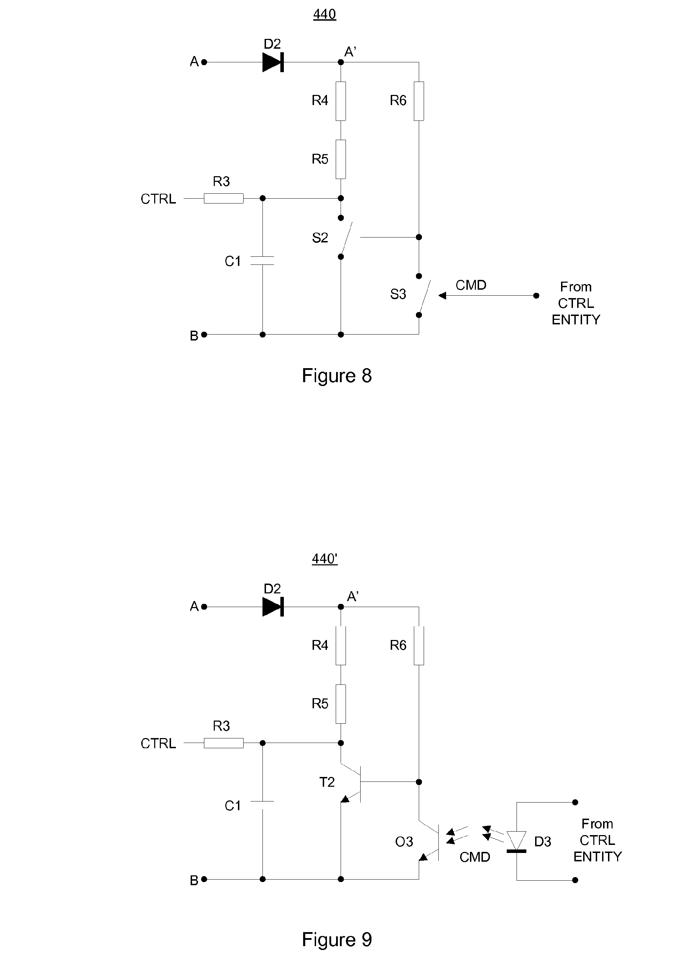

Typically, the control signal CTRL in the enabling state comprise a control signal CTRL that exhibits a voltage that exceeds a threshold voltage required to set/keep the switch S1 in the closed state, whereas the control signal CTRL in the non-enabling state exhibits a voltage that fails to exceed the threshold voltage, thereby setting/keeping the switch in the open state. While Figure 8 schematically illustrates a control circuit 440 according to an embodiment, wherein a node A' and the node B (and hence the poles of the dimmer device 110 output) are coupled to each other by two controllable branches, the control circuit may be described in general terms as follows: the nodes A' and B are coupled to each other by a first branch and a second branch, the first branch forming a first controllable current path between the nodes A' and B and the second branch forming a second controllable current path between the nodes A' and B. The first branch may be selectively operated in one of conductive and non-conductive states, whereas the state of the first branch controls the operation of the second branch in one of the conductive and non-conductive states. The state of the second branch, in turn, controls accumulation of a charge to a charge to storage, which charge is applied to enable or disable the flow of electric current through the bottom load circuit 330. In particular, when there is no activation command CMD issued, the first branch is set to the non-conductive state and the voltage in the node A' is directed to keep the second branch in the conductive state. Consequently, the flow of electric current via the second branch is enabled and no charge accumulates to the charge storage, thereby disabling the flow of electric current through the bottom load circuit 330. This may also be considered as issuing the control signal CTRL is issued in the non-enabling state. In contrast, if the action command CMD is issued, the first branch is set to the conductive state and the voltage directed to control the second branch is no longer sufficient to keep the second branch in the conductive state. Consequently, the voltage in the node A' is directed to charge the charge storage, which stored charge is provided for enabling the flow of electric current through the bottom load circuit 330. This may also be considered as issuing the control signal CTRL in the enabling state

In the exemplifying control circuit 440 a resistor R6 and a switch S3 are arranged in the first current path between the nodes A' and B, whereas resistors R4 and R5 together with a switch S2 are arranged in a second branch forming a second current path between the nodes A' and B. Moreover, a capacitor C1 serves as the charge storage, and the enabling or disabling of the flow of electric current through the bottom load circuit 330 is effectuated via a resistor R3.

The operation of the embodiment of the control circuit 440 depicted in Figure 8 is described in the following. Assuming the case where there is no activation command CMD issued, a switch S3 is open and hence non-conductive. Consequently, a switch S2 is controlled by a voltage received via a resistor R6, which keeps the switch S2 in the closed state and hence conductive. As a consequence, no charge accumulates in a capacitor C1 because the current that flows via resistors R4 and R5 has a direct path to the node B via the switch S2 that is in conductive state. Therefore, the voltage constituting the control signal CTRL is low to an extent making it represent non-enabling state of the control signal CTRL that causes disabling the flow of electric current through the bottom load circuit 330, 430, 430'.

When the activation command CMD is issued, the switch S3 is closed and becomes conductive. As a consequence, there is no more voltage keeping the switch S2 in conductive state and hence the capacitor C1 is charged by the current that flows via the resistors R4 and R5 since the current path via the switch S2 is now blocked. With the capacitor C1 charged, the control signal CTRL obtained via a resistor R3 now exhibits a positive voltage that is arranged to be sufficiently high to serve as the enabling state of the control signal CTRL that causes enabling the flow of electric current through the bottom load circuit 330, 430, 430'. Diode D2 serves, at least, to block the current path from the node A' towards the node A.

The flow of current through the bottom load circuit 330, 430, 430' continues as long as the charge accumulated in the capacitor C1 is sufficient to keep the control signal CTRL in the enabling state. In this regard, note that the control circuit 440 is arranged to derive the control signal CTRL on basis of energy received from the output of the dimmer device 110 (via the bridge rectifier 350 that is coupled thereto). Since the electric current via the resistors R4 and R5 charging the capacitor C1 is received after the-cut off moment at the trailing edge of the phase-cut half-wave of the phase-cut AC output from the dimmer device 110, the electric current charging the capacitor C1 originates from the capacitively stored energy at the output of the dimmer device 110, i.e. from the superfluous excess energy the 110 the discharging circuit 300 is arranged to discharge. Consequently, the capacitor C1 remains charged - and the flow of electric current through the bottom load resistor continues as long as there is capacitively stored excess energy to be discharged.

The switch S2 may be provided as a npn-type BJT with its collector coupled (via the resistors R4 and R5) to the node A', its emitter coupled to the node B and its base coupled to a node between the resistor R6 and the switch S3. The switch S3 may be provided as a npn-type BJT wit is collector coupled (via the resistor R6) to the node A', its emitter coupled to the node B and its gate coupled to a conductor arranged to provide the activation command CMD from the external control entity. Implementing the switches S2 and S3 as respective BJTs serves as a non-limiting example and switches of other type may be applied instead.

Figure 9 schematically illustrates a control circuit 440' according to an embodiment. As a difference to the control circuit 440, the control circuit 440' shows the switch S2 embodied as a BJT T2. Moreover, as another difference to the control circuit 440 the control circuit 440' provides the switch S2 as a phototransistor 03 of an optocoupler, whereas the activation command CMD is issued as light emitted from a LED D3 of the optocoupler in control of the external control entity. The phototransistor 03 is set into and/or kept in conductive state in response to the phototransistor 03 detecting light being emitted from the LED D3, whereas the phototransistor 03 is set into and/or kept in non-conductive state in response to the phototransistor 03 failing to detect light being emitted from the LED D3.

A benefit of using the pair of LED D3 and the phototransistor 03 to transmit the activation command CMD from the external control entity to the control circuit 440' in an optical form is the galvanic isolation that eliminates any interferences and interplay between different voltage levels that might be caused by electrical coupling between the discharging circuit 300 and the external control entity. This may be especially advantageous in case the dimmer device 110 constitutes one output channel of a multi-channel dimmer for dimming multiple dimmable light sources.

Instead of the pair of the LED D3 and the phototransistor 03 e.g. a pair of a LED and a photodiode may be employed to provide the optical link, and hence the galvanic isolation, between the external control entity and the discharging circuit 300. Moreover, means for providing galvanic isolation different from an optocoupler may be applied instead, such as a transformer for example.

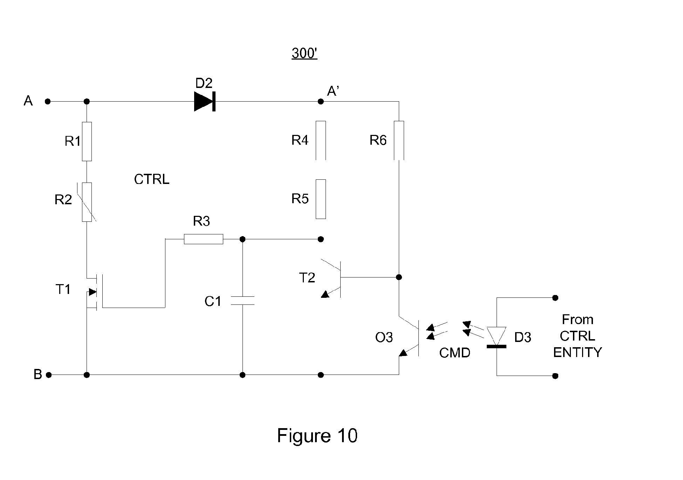

Figure 10 schematically illustrates the discharging circuit 300' embodied as a combination of the bottom load circuit 430' and the control circuit 440'. In Figure 10, the switch S1 of the bottom load circuit 430' is provided as a MOSFET T1. The discharging circuit 300' is naturally just a non-limiting example of combining the bottom load circuits and control circuits or their variants into a discharging circuit.

The operations, procedures and/or functions described in the foregoing in context of the discharging circuits 300 and 300' may be provided as a method for operating the bottom load circuit 330, 430, 430'. Such method may comprise selectively enabling or disabling the flow of electric current through the bottom load circuit 330, 430, 430' in response to receiving the activation command CMD e.g. from the control portion or from the control entity, as described in the foregoing.

Reference(s) to a processor or to a microprocessor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A circuit for use as a bottom load in an output of a dimmer device arranged to provide trailing-edge type phase-cut alternating current for a dimmable light source, the circuit comprising
a bottom load circuit comprising a controllable current path that couples poles of said output to each other and a bottom load resistor arranged in said controllable current path, and
a control circuit comprising a command input for receiving an activation command, the control circuit arranged to selectively enable or disable the flow of electric current through said bottom load in accordance with the activation command.

2. A circuit according to claim 1, wherein said control circuit is arranged to
enable the flow of electric current through said bottom load resistor in response to receiving the activation command, and
disable the flow of electric current through said bottom load resistor in response to not receiving the activation command.

3. A circuit according to claim 1 or 2, wherein said bottom load circuit further comprises a first switch arranged in said controllable current path and wherein the control circuit is arranged to
cause closing the first switch to enable the flow of electric current through said bottom load resistor in response to receiving the activation command, and
cause opening the first switch to disable the flow of electric current through said bottom load resistor in response to not receiving the activation command.

4. A circuit according to any of claims 1 to 3, wherein the control circuit is arranged to selectively enable or disable the flow of electric current through said bottom load by issuing a control signal in one of an enabling state and disabling state,
wherein the enabling state of the control signal comprises a control signal exhibiting voltage that exceeds a predefined threshold voltage, and
wherein the non-enabling state of the control signal comprises a control signal exhibiting voltage that fails to exceed said predefined threshold voltage.

5. A circuit according to any of claims 1 to 4, wherein the control circuit comprises a second controllable current path that couples poles of said output to each other and, wherein the control circuit is arranged to
cause disabling the flow of electric current through said second controllable current path in response to receiving the activation command to enable the flow of electric current through said bottom load resistor, and
cause enabling the flow of electric current through said second controllable current path in response to not receiving the activation command to disable the flow of electric current through said bottom load resistor.

6. A circuit according to claim 5, wherein said control circuit further comprising a second switch arranged in said second controllable current path, and wherein the control circuit is arranged to
cause opening the second switch to disable the flow of electric current through said second controllable current path in response to receiving the activation command, and
cause closing the second switch to enable the flow of electric current through said bottom load resistor in response to not receiving the activation command.

7. A circuit according to any of claims 1 to 6, wherein the bottom load circuit further comprises a positive temperature coefficient, PTC, thermistor arranged in said controllable current path.

8. A circuit according to any of claims 1 to 7, wherein said control circuit is arranged to derive the control signal on basis of operating energy received via an operating power input that is coupled to said output of the dimmer device.

9. A circuit according to any of claims 1 to 8, wherein said command input comprises a galvanically isolated command input.

10. A circuit according to claim 9, wherein said galvanically isolated command input comprises a photosensor of an optoisolator arranged to receive the activation signal as light emitted by a light source of the optoisolator.

11. A circuit according to any of claims 1 to 10, further comprising a control portion arranged to issue said activation commands at moments of time coinciding with cut-off moments at the trailing edges of phase-cut half-waves of said phase-cut alternating current.
